# EUROPEAN PATENT SPECIFICATION

(11) **EP 2 217 828 B1**
(45) Date of publication and mention of the grant of the patent: **27.06.2012**
(21) Application number: 08836816.2
(22) Date of filing: 08.10.2008
(51) Int. Cl.: F16F 9/02, F16F 9/36

(54) **GAS SPRING**
GASFEDER
RESSORT À GAZ

(30) Priority: 09.10.2007 JP 2007262851
(43) Date of publication of application: 18.08.2010
(73) Proprietor: Kayaba Industry Co., Ltd., Tokyo 105-6190 (JP); KYB-YS Co., Ltd., Hanishina-Gun Nagano 3890688 (JP)
(72) Inventor: KATAYAMA, Takumi, Toyota-shi Aichi 471-8571 (JP); IWAMOTO, Katsuya, Toyota-shi Aichi 471-8571 (JP); ASA, Takashi, Tokyo 105-6111 (JP); SAITOU, Yasushi, Hanishina-Gun Nagano 389-0688 (JP)
(74) Representative: Charrier, Rapp & Liebau
(86) International application number: PCT/JP2008/068801
(87) International publication number: WO 2009/048161

(56) References cited:
- EP-A- 1 818 562
- JP-A- 2007 085 377
- US-A- 6 003 848

## Description

### [Technical Field]

The present invention relates to a gas spring and particularly to an improvement to a gas spring used at a rear door or a seat back of a vehicle, for example.

### [Background Art]

Various proposals have been made for gas springs for use at a rear door or a seat back of a vehicle. Japan Patent Application Publication No. 2007-85377 (see, e.g., paragraphs 0005, 0006, 0008, 0009 and Fig. 7), for example, discloses a gas spring in which a dust seal is located in series with a rod guide at a head end portion of a cylinder body, in which a rod body moves in and out of the cylinder body.

The gas spring has a dust seal with a lip in sliding contact with an outer circumference of the rod body at the head end portion of the cylinder body which the rod body is moved into and out of. The dust seal is located in series with the rod guide with the rod body being similarly disposed in the head end portion of the cylinder body and penetrating through a shaft core portion.

In a gas spring of this type, the dust seal is formed of an elastic material. The rod guide is formed of a material more rigid than the dust seal, and as disclosed in the document, the dust seal and the rod guide are fixed inside the head end portion by folding an opening end portion of the cylinder body inward to form a seal.

Thus, in the gas spring disclosed in the Japanese application publication, concentricity of the rod body with the cylinder body is guaranteed by the rod guide when the rod body is moved inside the cylinder body and dust adhering to the outer circumference of the rod body is scraped off by a lip of the dust seal.

Document US-A-6 003 848 discloses as gas spring in which a rod body 16 is disposed insides a cylinder body 14 with a gas of a predetermined pressure sealed inside the cylinder body, wherein the rod body is movable into and out of the cylinder body, wherein the gas spring includes a rod guide 40 with a shaft core portion penetrated by the rod body, a head end portion through which the rod body in the cylinder body is moved into and out of the cylinder body, and a dust seal 102 with a lip in sliding contact with an outer circumference of the rod body, wherein a sealed end portion at an opening end portion of the cylinder body is in contact with an outer end of the rod guide at an end portion in a projecting direction from inside the cylinder body of the rod body, and wherein the dust seal is integrally incorporated at the outer end portion of the rod guide.

### [Disclosure of Invention]

### [Technical Problem]

In the device described in the Japanese application publication, if the pressure of the gas sealed inside the device is proper there is no particular nonconformity. If, though, the sealed gas pressure is higher, there is a possibility that a slight nonconformity may occur.

That is, in most gas springs of this type, the thrust of the rod body projecting from inside the cylinder body is determined by the sealed gas pressure. Thus, at a given gas pressure, a larger diameter rod body with respect to the cylinder body will result in a larger thrust.

However, generally speaking, if the diameter of the rod body is large, its weight will also be large to a corresponding degree. A higher sealed gas pressure might thus be used so that a larger thrust can be obtained while decreasing the overall weight of the device by reducing the diameter of the rod body.

As a result, over time the rod guide inside the head end portion of the cylinder body may be pushed by the sealed gas pressure into the sealed end portion at the opening end portion of the cylinder body. This can impair the dust seal accordingly and there is a danger that a sealing margin of the lip, which is in sliding contact with the outer circumference of the rod body in the dust seal, may deviate from its intended configuration.

The present invention was made in view of such circumstances and is intended to provide an improved gas spring that can permanently maintain the sealing effectiveness of the lip in the dust seal without being affected by the pressure from the gas sealed inside the device, and to provide further improvements to the device's general properties.

### [Technical Solution]

A gas spring according to the present invention can be configured such that the rod body is linked with the cylinder body with a gas of a predetermined pressure is sealed inside the cylinder body and the rod body movable into and out of the cylinder body. The device can include a rod guide through which the rod body penetrates at a shaft core portion inside a head end portion where the rod body moves into and out of the cylinder body. A dust seal with a lip in sliding contact with an outer circumference of the rod body is located at a sealed end portion at an opening end portion of the cylinder body. An outer end of the rod guide can be placed in contact with the inside of the cylinder body, with the dust seal integrally incorporated at the outer end portion of the rod guide.

### [Advantageous Effects]

Since the outer end of the rod guide is brought into contact with the sealed end at the opening end portion of the cylinder body, even if the pressure of the gas sealed inside the cylinder body is high and the rod guide is thus pressed toward the sealed end portion, the dust seal is not compromised and the sealing of the dust seal lip is maintained over time as originally intended.

### [Best Mode of Carrying Out the Invention]

The gas spring according to the present invention may be used at a rear door or a seat back of a vehicle, for example, with one end connected to a so-called fixed side and the other end to a movable side forming elements of the vehicle.

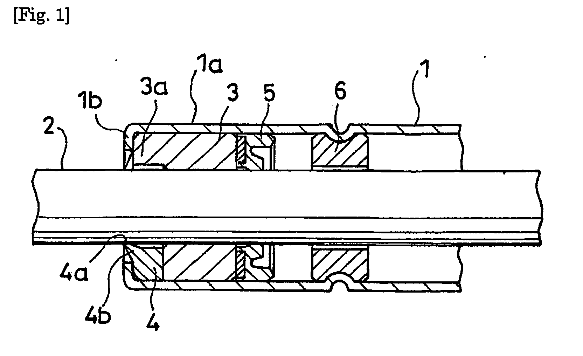

A portion of a gas spring is illustrated in Fig. 1. The gas spring includes a rod body 2 connected with a cylinder body 1 with a gas of a predetermined pressure sealed inside the cylinder body 1. The rod body 2 is movable into and out of the cylinder body 1. A rod guide 3 and a dust seal 4 are located at a head end portion 1a of the cylinder body 1 where the rod body 2 moves into and out of the cylinder body 1.

A U-packing 5 and a retainer 6 are located inside the head end portion la of the cylinder body 1, in addition to the rod guide 3 and the dust seal 4.

The U-packing 5 has a back face at its left end in the figure. The back face abuts an inner end of the rod guide 3 so as to prevent leakage of gas sealed inside the cylinder body 1. The retainer 6 is fixed by roll-sealing the outer circumference of the cylinder body 1. The retainer 6 functions as a stopper that contacts a piston body (not shown) on the rod body 2 when the gas spring is operated and the rod body is extended to its maximum extent. The retainer 6 also defines an oil reservoir in which oil for lubrication is contained between it and the U-packing 5.

The rod guide 3 guarantees concentricity with respect to the cylinder body 1 as the rod body 2 moves into and out of the cylinder body 1. The rod body 2 penetrates the shaft core portion while providing a shaft length effective to maintain the concentricity

The rod guide 3 has a predetermined mechanical strength and is made of a hard synthetic resin with an appropriate rigidity so as to contribute to reduction of the overall weight of the gas spring.

For its part the dust seal 4 has an annular lip 4a in sliding contact with the outer circumference of the rod body 2 so that when the rod body 2 is moved into the cylinder body 1, dust adhering to the outer circumference of the rod body 2 is scraped off by the lip 4a. The lip is formed of an elastic material so that it will not scratch the outer circumference of the rod body 2. Appropriate materials may include a synthetic resin material or a rubber material with appropriate elasticity, oil resistance, and weather resistance.

The above are characteristics of rod guides 3 and dust seals 4 even in conventional gas springs. In the gas spring of this invention, the rod guide 3 and the dust seal 4 are formed and have characteristic features as described below.

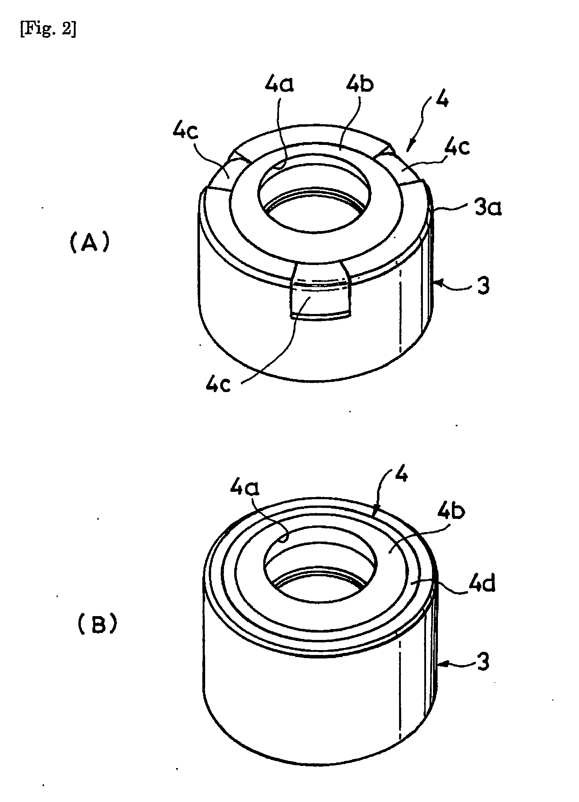

In the gas spring of this embodiment the dust seal 4 is integrally incorporated at an outer end portion 3a at the left end in the figure of the rod guide 3. The dust seal 4 projects from inside the cylinder body 1 along the rod body 2. In this embodiment, the rod guide 3 and the dust seal 4 are made as a single part (see Fig. 2), while they are made as two separate parts in a conventional gas spring.

By forming a single component instead of two, the total number of components of the gas spring can be reduced and the number of assembling steps decreased when this gas spring is manufactured.

Also, when the dust seal 4 is incorporated into the rod guide 3, as compared with a conventional case where the dust seal 4 is arranged in series with the rod guide 3, the length required to arrange two components in series at the head end portion 1a of the cylinder body 1 is not required, thereby allowing a reduction in the axial length at the head end portion 1a.

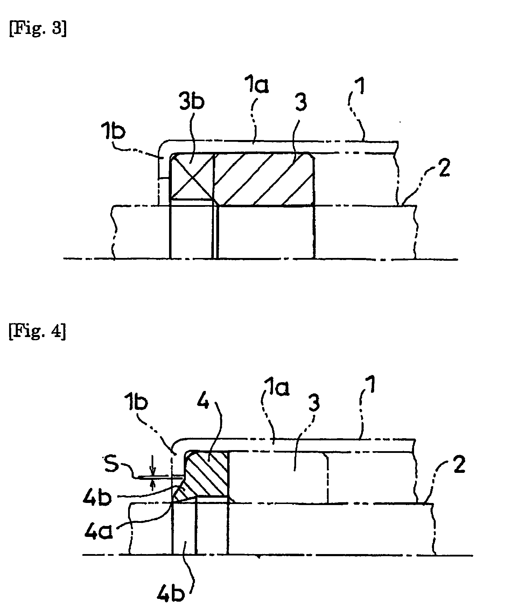

The rod guide 3 in this embodiment integrally incorporates the dust seal 4. In order to dispose element in the head end portion 1a of the cylinder body 1, the opening end portion of the cylinder body 1 is sealed and fixed at the head end portion 1a with a sealed end portion 1b in contact with the outer end of the rod guide 3 (see Fig. 3).

As a result, the rod guide 3 is carried by the sealed end portion 1b in the opening end portion of the cylinder body 1 at the head end portion 1a of the cylinder body 1. Thus, even if the outer end of the rod guide 3 is strongly pressed against the sealed end portion 1b when sealing against a gas with a higher than normal pressure inside the cylinder body 1, the dust seal 4, which will be described later, will not be affected.

The dust seal 4 has its annular lip 4a in sliding contact with the outer circumference of the rod body 2, and in this way generally similar to the conventional dust seal as mentioned above. The dust seal 4 also includes an annular lip base portion 4b with the lip 4a on its inner circumference. The outer circumference of the lip base portion 4b is separated from the inner circumference of the sealed end portion 1b at the opening end portion of the cylinder body 1 with an appropriate gap S between them (see Fig. 4).

When the sealed end portion 1b at the opening end portion of the cylinder body 1 is brought into contact with the outer end of the rod guide 3, if the sealed end portion 1b interferes with the dust seal 4, the sealing performance against the outer circumference of the rod body 2 of the lip 4a of the dust seal 4 may be compromised.

In this embodiment, therefore, when the sealed end portion 1b at the opening end portion of the cylinder body 1 is brought into contact with the outer end of the rod guide 3 as shown in Fig. 4, the sealed end portion 1b is configured not to interfere with the lip base portion 4b that has the lip 4a of the dust seal 4 on its inner circumference.

In order to achieve this, the dust seal 4 in this embodiment has, as shown in Fig. 2A, a base portion 4c that is integrally formed on the outer circumference of the annular lip base portion 4b that has the lip 4a on its inner circumference with the lip 4a in sliding contact with the outer circumference of the rod body 2. The base portion 4c supports the lip base portion 4b from the outer circumference side of the lip base portion 4b. The base portion 4c is fitted to a recess portion 3b (See Fig. 3) at the outer end portion 3a of the rod guide 3.

Since the base portion 4c is fitted in the recess portion 3b of the rod guide 3, the dust seal 4 is not deformed at the lip base portion 4b and the sealing performance of the lip 4a is compromised.

An outer diameter of the base portion 4c is smaller than the outer diameter of the rod guide 3, and thus, by allowing the dust seal 4 to move or "float" in its radial direction, the lip 4a can be better aligned against the surface of the rod body 2 so that their sliding performance can be improved.

In the alternative embodiment shown in Fig. 2B, the base portion that supports the lip base portion 4b from its outer circumference side in the dust seal 4 is an annular base portion 4d that is formed integrally on the outer circumference of the lip base portion 4b. The annular base portion 4d is fits inside the annular recess portion at the outer end portion 3a of the rod guide 3.

In the embodiment shown in Fig. 2B, since the annular base portion 4d fits into the annular recess portion of the rod guide 3, deformation is not caused at the lip base portion 4b, and thus the sealing performance of the lip 4a is not compromised.

Also, and as shown in Fig. 2B, the outer diameter of the annular base portion 4d is smaller than the outer diameter of the annular recess portion of the rod guide 3, and thus, by allowing the dust seal 4 to float in the radial direction, the lip 4a can be aligned with the surface of the rod body 2 so that their sliding performance can be improved.

As mentioned above, the dust seal 4 of these embodiments are fixed at a predetermined position and thus not affected by pressure from the gas sealed inside the cylinder body 1. The sealing pressure of the lip 4a against the outer circumference of the rod body 2 is thus neither increased nor decreased, and thus, the performance of the lip 4a can be maintained as intended.

In Fig. 2A, three base portions 4c are disposed at equal intervals around the circumference of the dust seal 4. This number may of course be other than three so long as their position-fixing properties are maintained.

If the base portion is in the form of an independent base portion 4c, the amount of material used to form the dust seal 4 can be reduced. If the base portion is an annular base portion 4d, the recess portion at the outer end portion 3a of the rod guide 3 is also annular, and forming it is thus made easier.

### [Brief Description of the Drawings]

The present invention will be described based on presently preferred embodiments and in connection with the appended drawings, in which:
[Fig. 1]
   Fig. 1 is a partial sectional view illustrating a gas spring according to the present invention with a partial front view;
[Fig. 2]
   Fig. 2A and 2B are perspective views illustrating rod guides incorporating dust seals;
[Fig. 3]
   Fig. 3 is a half-sectional view illustrating a rod guide; and
[Fig. 4]
   Fig. 4 is a half-sectional view illustrating the dust seal.

### [Explanation of Reference]

- 1: cylinder body
- 1a: head end portion
- 1b: sealed end portion
- 1c: inner circumference
- 2: rod body
- 3: rod guide
- 3a: outer end portion
- 3b: recess portion
- 4: dust seal
- 4a: lip
- 4b: lip base portion
- 4c: base portion
- 4d: annular base portion

## Claims

1. A gas spring in which a rod body (2) is disposed inside a cylinder body (1) with a gas of a predetermined pressure sealed inside the cylinder body, wherein the rod body is movable into and out of the cylinder body, wherein the gas spring includes a rod guide (3) with a shaft core portion penetrated by the rod body, a head end portion (1a) through which the rod body in the cylinder body is moved into and out of the cylinder body, and a dust seal (4) with a lip (4a) in sliding contact with an outer circumference of the rod body, wherein a sealed end portion (1b) at an opening end portion of the cylinder body is in contact with an outer end of the rod guide (3) at an end portion in a projecting direction from inside the cylinder body (1) along the rod body (2), and wherein the dust seal (4) is integrally incorporated and supported floatably in its radial direction at the outer end portion of the rod guide.

2. The gas spring according to claim 1, wherein the dust seal has an annular lip in sliding contact with the outer circumference of the rod body, and wherein an outer circumference of an annular lip base portion having the lip on an inner circumference is separated from an inner circumference of the sealed end portion at the opening end portion of the cylinder body and an outer diameter of a base portion that is integrally formed on the outer circumference of the annular lip base portion, is smaller than the outer diameter of the rod guide.

3. The gas spring according to claim 1, wherein the dust seal has an annular lip in sliding contact with the outer circumference of the rod body, and wherein an outer circumference of an annular lip base portion having the lip on an inner circumference is separated from an inner circumference of the sealed end portion at the opening end portion of the cylinder body and an outer diameter of the annular base portion is smaller than the outer diameter of the annular recess portion of the rod guide.

4. The gas spring according to claim 2, wherein the dust seal has an annular lip in sliding contact with the outer circumference of the rod body, wherein a base portion is formed integrally on the outer circumference of the annular lip base portion with the lip on the inner circumference of the lip base portion, wherein the base portion supports the lip base portion from an outer circumference of the base portion, and wherein the base portion is fitted in and disposed at equal intervals around the circumference of a recess portion at an outer end portion of the rod guide.

5. The gas spring according to claim 2, wherein the dust seal has an annular lip in sliding contact with the outer circumference of the R o d body and an annular base portion formed integrally on an outer circumference of an annular lip base portion with the lip on an inner circumference of the lip base portion, wherein the base portion supports the lip base portion from the outer circumference side of the lip base portion, and wherein the annular base portion is fitted in an annular recess portion at the outer end portion of the rod guide.

## Patentansprüche

1. Gasfeder in der ein Stangenkörper (2) in einem Zylinderkörper (1) angeordnet ist, wobei Gas eines vorgegebenen Drucks in dem Zylinderkörper versiegelt ist, wobei der Stangenkörper in und aus dem Zylinderkörper bewegbar ist, wobei die Gasfeder eine Stangenführung (3) mit einer vom Stangenkörper durchdrungenen Schaftkernabschnitt, einen Kopfendabschnitt (1a), durch den der Stangenkörper im Zylinderkörper in und aus dem Zylinderkörper bewegt wird, und eine Staubdichtung (4) mit einer mit einem Außenumfang des Stangenkörpers in Gleitkontakt stehenden Lippe (4a) enthält, wobei eine Dichtendabschnitt (1b) an einem Öffnungsendabschnitt des Zylinderkörpers in Kontakt mit einem Außenende der Stangenführung (3) an einem Endabschnitt, welcher in einer vom Inneren des Zylinderkörpers (1) längs des Stangenkörpers (2) herausragenden Richtung steht, und wobei die Staubdichtung (4) am Außenendabschnitt der Stangenführung integral aufgenommen und in ihrer radialen Richtung beweglich gelagert ist.

2. Gasfeder nach Anspruch 1, wobei die Staubdichtung eine in Gleitkontakt mit dem Außenumfang des Stangenkörpers stehende ringförmige Lippe aufweist, wobei ein Außenumfang eines ringförmigen Lippen-Basisabschnitts, der die Lippe an einem Innenumfang hat, von einem Innenumfang des Dichtendabschnitts an dem Öffnungsendabschnitt des Zylinderkörpers getrennt ist, und wobei ein Außendurchmesser eines integral auf dem Außenumfang des ringförmigen Lippenbasisabschnitts gebildeten Basisabschnitts kleiner ist als der Außendurchmesser der Stangenführung.

3. Gasfeder nach Anspruch 1, wobei die Staubdichtung eine in Gleitkontakt mit dem Außenumfang des Stangenkörpers stehende ringförmige Lippe aufweist, wobei ein Außenumfang eines ringförmigen Lippen-Basisabschnitts, der die Lippe an einem Innenumfang hat, von einem Innenumfang des Dichtendabschnitts an dem Öffnungsendabschnitt des Zylinderkörpers getrennt ist, und wobei ein Außendurchmesser des ringförmigen Basisabschnitts kleiner als der Außendurchmesser des ringförmigen Ausnehmungsabschnitts der Stangenführung ist.

4. Gasfeder nach Anspruch 2, wobei die Staubdichtung eine in Gleitkontakt mit dem Außenumfang des Stangenkörpers stehende ringförmige Lippe hat, wobei ein Basisabschnitt integral an dem Außenumfang des ringförmigen Lippenbasisabschnitts, der die Lippe an einem Innenumfang des Lippenbasisabschnitts hat, wobei der Basisabschnitt den Lippenbasisabschnitt von einem Außenumfang des Basisabschnitts stützt, und wobei der Basisabschnitt in einen Ausnehmungsabschnitt an einem Außenendabschnitt der Stangenführung eingepasst und in gleichen Intervallen um den Umfang des Ausnehmungsabschnitts angeordnet ist.

5. Gasfeder nach Anspruch 2, wobei die Staubdichtung eine in Gleitkontakt mit dem Außenumfang des Stangenkörpers stehende ringförmige Lippe und einen integral an einem Außenumfang eines ringförmigen Lippenbasisabschnitts, welcher die Lippe an einem Innenumfang des Lippenbasisabschnitts hat, gebildeten ringförmigen Basisabschnitt hat, wobei der Basisabschnitt den Lippenbasisabschnitt von der Außenumfangsseite des Lippenbasisabschnitts stützt und wobei der ringförmige Basisabschnitt in einen ringförmigen Ausnehmungsabschnitt am äußeren Außenendabschnitt der Stangenführung eingepasst ist.

## Revendications

1. Ressort à gaz dans lequel un corps de tige (2) est disposé à l'intérieur d'un corps de cylindre (1) avec un gaz d'une pression prédéterminée étanché à l'intérieur du corps de cylindre, dans lequel le corps de tige est déplaçable à l'intérieur et à l'extérieur du corps de cylindre, dans lequel le ressort à gaz comprend un guide de tige (3) avec une portion centrale d'arbre pénétrée par le corps de tige, une portion d'extrémité de tête (1a) à travers laquelle le corps de tige dans le corps de cylindre est déplacé à l'intérieur et à l'extérieur de corps de cylindre, et un joint étanche aux poussières (4) avec une lèvre (4a) en contact coulissant avec une circonférence externe du corps de tige, où une portion d'extrémité obturée (1b) au niveau d'une portion d'extrémité d'ouverture du corps de cylindre est un contact avec une extrémité externe du guide de tige (3) au niveau d'une portion d'extrémité dans une direction en saillie à partir de l'intérieur du corps de cylindre (1) le long du corps de tige (2), et où le joint étanche aux poussières (4) est incorporé solidairement et supporté de manière flottante dans sa direction radiale au niveau de la portion d'extrémité externe du guide de tige.

2. Ressort à gaz selon la revendication 1, dans lequel le joint étanche aux poussières comporte une lèvre annulaire en contact coulissant avec la circonférence externe du corps de tige, et dans lequel une circonférence externe d'une portion de base de lèvre annulaire comportant la lèvre sur une circonférence interne est séparée d'une circonférence interne de la portion d'extrémité obturée au niveau de la portion d'extrémité d'ouverture du corps de cylindre et un diamètre externe d'une portion de base qui est formée solidairement sur la circonférence externe de la portion de base de lèvre annulaire, est plus petit que le diamètre externe du guide de tige.

3. Ressort à gaz selon la revendication 1, dans lequel le joint étanche aux poussières comporte une lèvre annulaire en contact coulissant avec la circonférence externe du corps de tige, et dans lequel une circonférence externe d'une portion de base de lèvre annulaire comportant la lèvre sur une circonférence interne est séparée d'une circonférence interne de la portion d'extrémité scellée au niveau de la portion d'extrémité du corps de cylindre et un diamètre externe de la portion de base annulaire est plus petit que le diamètre externe de la portion d'évidement annulaire du guide de tige.

4. Ressort à gaz selon la revendication 2, dans lequel le joint étanche aux poussières comporte une lèvre annulaire en contact coulissant avec la circonférence externe du corps de tige, dans lequel une portion de base est formée solidairement sur la circonférence externe de la portion de base de lèvre annulaire avec la lèvre sur la circonférence interne de la portion de base de lèvre, dans lequel la portion de base supporte la portion de base de lèvre à partir d'une circonférence externe de la portion de base, et dans lequel la portion de base est ajustée et disposée à des intervalles égaux autour de la circonférence d'une portion d'évidement au niveau d'une portion d'extrémité externe du guide de tige.

5. Ressort à gaz selon la revendication 2, dans lequel le joint étanche aux poussières comporte une lèvre annulaire en contact coulissant avec la circonférence externe du corps de tige et une portion de base annulaire formée solidairement sur une circonférence externe d'une portion de base de lèvre annulaire avec la lèvre sur une circonférence interne de la portion de base de lèvre, dans lequel la portion de base supporte la portion de base de lèvre à partir du côté circonférence externe de la portion de base de lèvre, et dans lequel la portion de base annulaire est ajustée dans une portion d'évidement annulaire au niveau de la portion d'extrémité externe du guide de tige.
